Europäisches Patentamt

European Patent Office

Office européen des brevets

(11) Publication number: 0 368 407 A1

## EUROPEAN PATENT APPLICATION

(21) Application number: 89202796.2

(22) Date of filing: 07.11.89

(51) Int. Cl.5: A01G 9/12, A01G 13/00

(30) Priority: 09.11.88 NL 8802746

(43) Date of publication of application:
16.05.90 Bulletin 90/20

(84) Designated Contracting States:
AT BE CH DE ES FR GB GR IT LI LU NL SE

(71) Applicant: Delisse, Willem Jozef
Groothees 11
NL-5469 ST Erp(NL)

(72) Inventor: Delisse, Willem Jozef
Groothees 11
NL-5469 ST Erp(NL)

(74) Representative: Noz, Franciscus Xaverius, Ir.
et al
Algemeen Octrooibureau P.O. Box 645
NL-5600 AP Eindhoven(NL)

(54) Aid to be used in the cultivation of plants bearing fruits or flowers.

(57) The invention relates to an aid to be used in the cultivation of plants bearing fruits or flowers, which plants are trained along wires. The aid has an elongated body (6), which is provided near one end with at least one wire passage (11, 12) and near the other end with a supporting means (7).

A further aid according the invention is formed by a screen (15) to be used in the cultivation of plants bearing fruits or flowers, whereby the screen is provided with two resilient lips (19) with which the screen can be secured to a branch of a plant.

FIG. 1.

## Aid to be used in the cultivation of plants bearing fruits or flowers.

The invention relates to an aid to be used in the cultivation of plants bearing fruits or flowers, which plants are trained along wires.

In the cultivation of for example tomato plants the stems of the plants are trained along wires which extend upwards from the ground. During the growth it may be desirable to support the branches bearing the tomatoes, such that they maintain a desired position relative to the stem.

Also it may be desirable during the growth to be able to protect the tomatoes from too much sunlight.

The object of the invention is to obtain an aid by means of which the above requirements can be realised in a simple manner.

According to the invention this objective can be accomplished in that the aid has an elongated body, which is provided near one end with at least one wire passage and near the other end with a supporting means.

The aid according to the invention can be quickly and simply coupled to the wire supporting the plant, by passing the wire through the wire passage, whilst the supporting means can be utilized for supporting a branch bearing tomatoes.

According to a further aspect of the invention the supporting means can also be used for supporting a screen to be detachably connected to the supporting means. The screen may be provided such that a shading of a truss of tomatoes supported by a branch is achieved.

According to a further aspect of the invention the screen is provided with lips, with which the screen can be secured to a branch of the plant.

With such an embodiment the screen for shading tomatoes against the glare of the sun can be provided directly on the plant, without any further auxiliary means.

Although hereinabove and also hereinafter the application of the aid and the screen according to the invention is discussed in connection with tomato plants, it will be obvious that the aid and/or the screen may also be effectively used with other plants bearing fruits or flowers.

The invention will be further explained hereinafter with reference to the accompanying figures.

Fig 1 diagrammatically shows a plant trained along an upwardly extending supporting wire.

Fig 2 is an elevational view of an embodiment of an aid according to the invention.

Fig 3 is a side elevational view of Fig 2.

Fig 4 is a cross-section of a parasol-shaped screen according to the invention.

Fig 5 is a plan view of Fig 4, whereby only half the screen is illustrated.

Fig. 6 shows a second embodiment of a screen.

Fig. 7 is a cross-section of Fig. 6

Fig. 8 shows on a greater scale a cross-section of Fig. 7 according line VIII-VIII.

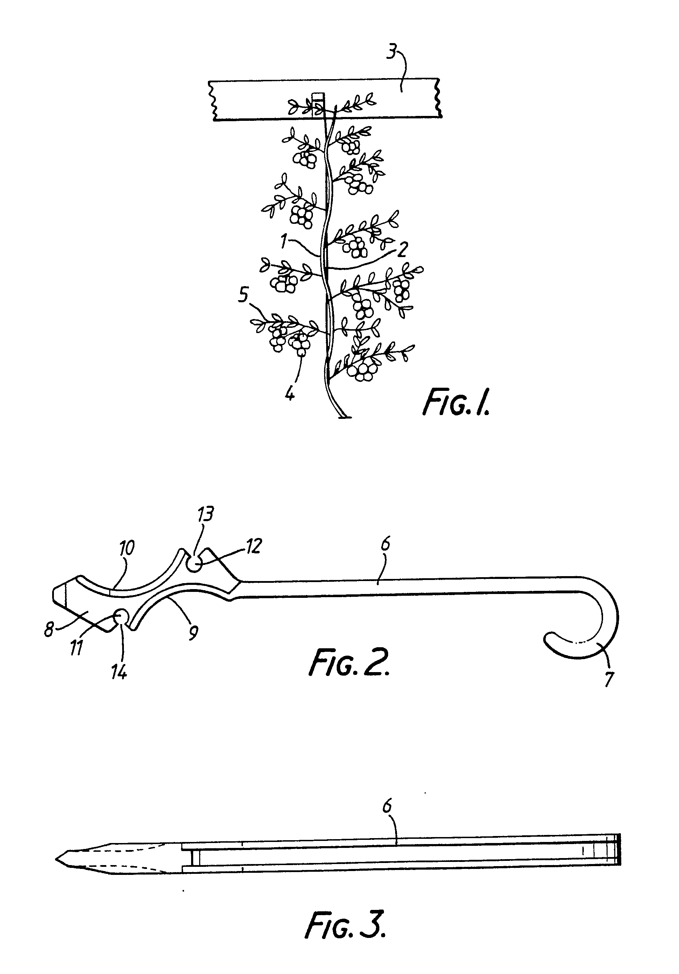

As is illustrated in Fig 1 it is usual in raising plants, such as for example tomato plants, to train the stem 1 of the plant along a vertically extending supporting wire 2, which is for example suspended from a supporting beam 3 provided at the top of a greenhouse or the like. In the case of tomatoes the fruits thereby hang in trusses on lateral branches 5 of the stem 2.

During the growth it may e.g. be desirable to support the lateral branches 5 with respect to the stem, in order to keep the lateral branches in a position as favourable as possible for their growth.

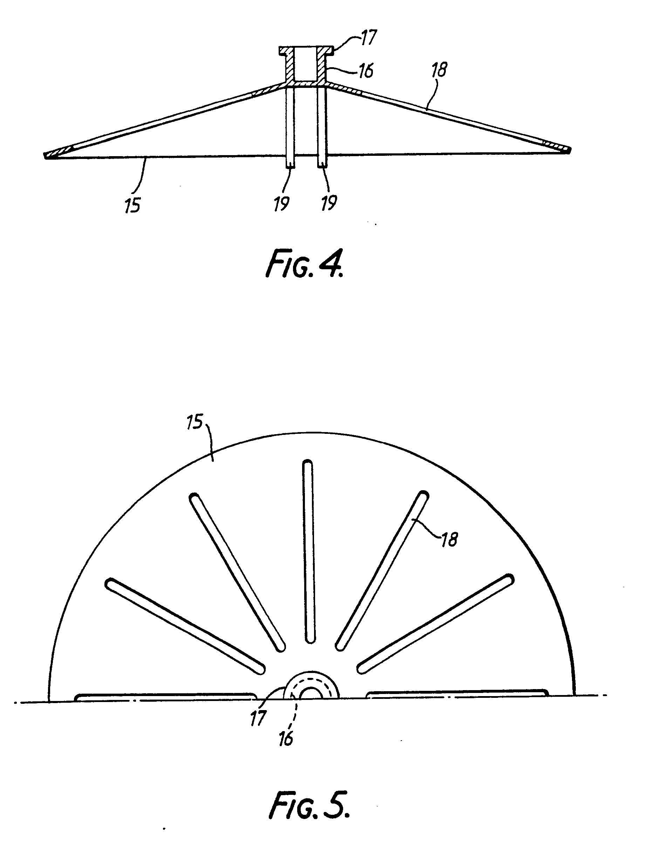

For this purpose use can be made of the aid shown in the Figs 2 and 3. The aid shown in the Figs 2 and 3 comprises an elongated bar-shaped part 6, one end of which is bent for forming a hook-shaped supporting means 7.

The other end of the bar-shaped part is joined by an elongated joining part 8, located more or less in the extension of the bar-shaped part 6, the long sides of said joining part being provided with arc-shaped parts 9 and 10 respectively, as appears from Fig 2. As is apparent from Fig 2 said arc-shaped parts are slightly staggered relative to each other in the longitudinal direction of the aid so that they overlap, seen in the longitudinal direction of the bar-shaped part 6, as a result of which a slim shape of the elongated joining part can be achieved.

In the elongated joining part there are furthermore provided two openings or holes 11 and 12, which are each located near one end of a bent part 9 or 10, and which are each accessible near the side of the elongated joining part 8, via an opening 13 or 14, which is dimensioned smaller than the diameter of the hole 11 or 12 in question. The holes 11 and 12 are already staggered relative to each other thereby, both in the longitudinal direction of the aid and transversely to the longitudinal direction of said aid.

The above-described aid can be connected to the supporting wire 2 in a simple manner, by guiding the supporting wire through one of the holes 11 and 12, for which purpose the supporting wire can be moved into the hole 11 or 12 via the opening 13 or 14.

The aid can thereby be provided in any desired position relative to the wire 2, whereby the stem 1 butts against the arc-shaped edge 9 or 10.

After the aid has thus been secured to the wire a branch 5 to be supported may e.g. be passed through the hook-shaped supporting means 7 or be connected thereto, in order to keep the branch it its desired position.

The above-described aid can also be used for supporting the parasol-like screen 15 illustrated in the Figs 4 and 5, which is substantially shaped like a truncated cone, to whose upper end there is secured a hub-shaped part 16, which is provided with a circular projecting collar 17 at its end remote from the screen 15. The design of the hook-shaped supporting means 7 and the hub-shaped part 16 is thereby such that the hub 16 can be pressed into the opening defined by the hook-shaped part 7 in order to be held by the hook-shaped part 7. By arranging the aid correctly on the supporting wire the screen 15 supported by the aid can thus be put in a position in which e.g. a truss of tomatoes or similar fruits or flowers can be shaded against the glare of the sun.

In order to be able to let through some light yet openings, e.g. radially extending elongated slots 18, may be provided in the screen, as is illustrated in the embodiment shown in the Figs 4 and 5. Said slots 18 also serve the purpose of ventilation.

In the illustrated embodiment the screen is furthermore provided with two resilient lips 19, extending parallel to each other and being integral with the screen. By means of said lips 19 the screen may be provided on a branch independently of the aid, by moving the branch in question between the lips 19. Also in this manner the screen 15 can be used for shading fruits or flowers against the glare of the sun, therefore.

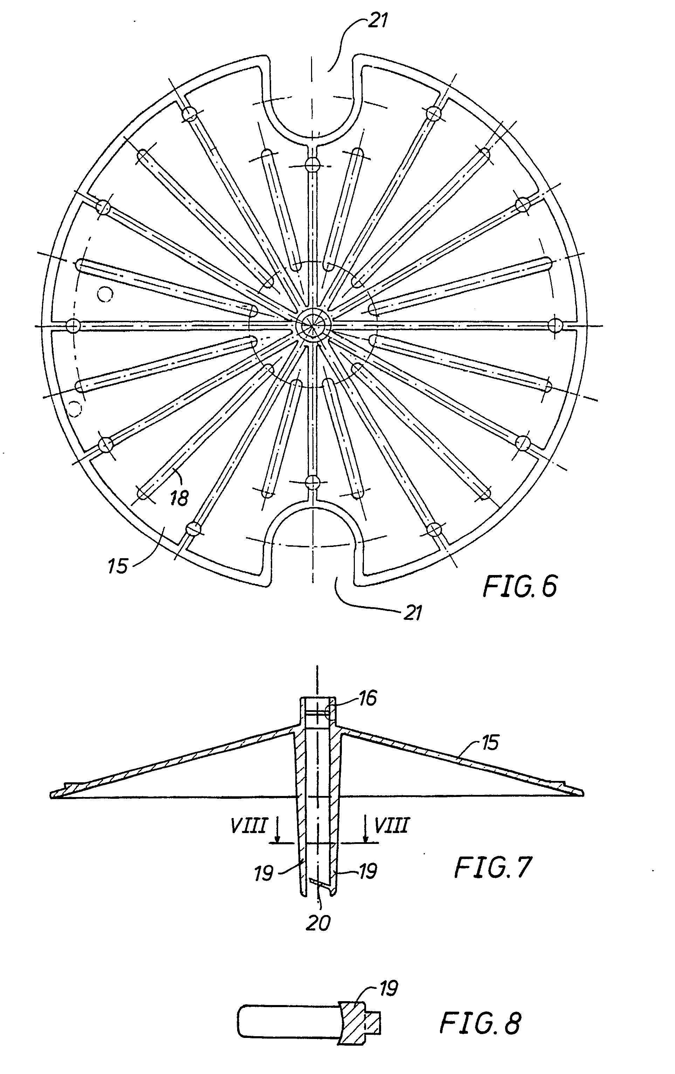

The screen shown in Figs. 6-8 corresponds mainly with the screen according Figs. 4 and 5 and corresponding parts have been provided with the same reference numbers in Figs. 4-8.

In the embodiment according Figs. 6-8 these have been fixed to the free end of one of the lips a resilient tab 20 extending from its fixing point to said lip towards the other lips inclined in a direction away from the free ends of said lips. The tab 20 prevents moving away of the lips 19 from the branch whereon they are shifted.

Further in the circumference of the screen 15 there have been provided a few recesses 21. In one of said recesses there can be arranged e.g. the stem of the plant for supporting the screen.

## Claims

1. Aid to be used in the cultivation of plants bearing fruits or flowers, which plants are trained along wires, characterized in that the aid has an elongated body, which is provided near one end with at least one wire passage and near the other end with a supporting means.

2. Aid according to claim 1, characterized in that near one end there are provided two wire passages spaced from each other by some distance, seen in the longitudinal direction of the body.

3. Aid according to claim 1 or 2, characterized in that the supporting means is hook-shaped

4. Aid according to claim 1, 2 or 3, characterized in that the aid has an elongated joining part at its end remote from the supporting means, at least one side of said joining part having a curved extension.

5. Aid according to claim 4, characterized in that two opposite longitudinal sides of the elongated joining part have a curved extension.

6. Aid according to claim 5, characterized in that parts having a curved extension are staggered relative to each other in the longitudinal direction of the aid.

7. Aid according to claim 6, characterized in that the wire passages are located near the ends of the curved parts and that such that the wire passage located near one end of a curved part is arranged beside the other curved part.

8. Aid according to any one of the preceding claims, characterized in that the wires passages are freely accessible from one side for a wire to be inserted into the passage in question.

9. Aid according to any one of the preceding claims, characterized in that a screen is detachably connected to the supporting means of the aid.

10. Screen obviously intended for being used with an aid according to any one of the preceding claims, characterized in that the screen is provided with a projecting part for connection to the supporting means.

11. Screen according to claim 10, characterized in that the screen is provided with a projecting part suitable for being accommodated in an opening defined by the hook-shaped supporting means.

12. Screen to be used in the cultivation of plants bearing fruits or flowers, characterized in that the screen is provided with two resilient lips with which the screen can be secured to a branch of a plant.

13. Screen according to any one of the claims 8 - 12, characterized in that the screen is at least substantially parasol-shaped.

14. Screen according claim 12 or 13, characterized in that at the side remote from the lips the screen has been provided with a projecting part.

15. Screen according to any one of the preceding claims 10 - 14, characterized in that openings are provided in the screen.

16. Screen according to any of the preceding claims 12 - 15, characterized in that at the free end of at least one lip there has been provided a resilient tab extending in the direction of the other lip.

17. Screen according to any of the preceding claims 13 - 16, characterized in that in the circumference of the screen there has been provided at least one recess.

Fig. 1.

Fig. 2.

Fig. 3.

**FIG. 4.**

**FIG. 5.**

21

18

15

*FIG.6*

21

16

15

VIII

VIII

19

19

20

*FIG.7*

19

*FIG.8*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2518868 (PERALES) <br> * page 3, line 21 – page 4, line 13 * <br> * page 5, lines 16 – 32; figures 1-3, 7, 8 * | 1-3, 8 | A01G9/12 <br> A01G13/00 |
| X | US-A-3518791 (CARSON) <br> * the whole document * | 1-3 | |
| X | FR-A-1200452 (FAURE) <br> * the whole document * | 9, 10 | |
| Y | | 13, 15 | |
| Y | BE-A-900992 (GEEROMS) <br> * the whole document * | 13, 15 | |
| A | GB-A-101 (FARR) AD 1911 <br> * the whole document * | 9, 13 | |
| A | GB-A-2081 (HOFFMANN) AD 1909 <br> * the whole document * | 12 | |

TECHNICAL FIELDS
SEARCHED (Int. Cl.5 )

A01G

The present search report has been drawn up for all claims

| Place of search | Date of completion of the search | Examiner |
|---|---|---|
| THE HAGUE | 12 FEBRUARY 1990 | HERYGERS J.J. |

EPO FORM 1503 03.82 (P0401)